(19) Europäisches Patentamt
European Patent Office
Office européen des brevets

(11) **EP 4 521 486 A1**

(12) # EUROPEAN PATENT APPLICATION

(43) Date of publication:
**12.03.2025 Bulletin 2025/11**

(21) Application number: **24198480.6**

(22) Date of filing: **04.09.2024**

(51) International Patent Classification (IPC):
**H01M 4/133** (2010.01)   **H01M 4/66** (2006.01)
**H01M 10/052** (2010.01)   **H01M 4/02** (2006.01)

(52) Cooperative Patent Classification (CPC):
**H01M 4/133; H01M 4/663; H01M 4/667;
H01M 10/052;** H01M 2004/021; H01M 2004/027;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.09.2023 CN 202311140530**

(71) Applicant: **Ningde Amperex Technology Ltd.
Ningde City, Fujian 352100 (CN)**

(72) Inventors:
• **ZHOU, Yahuan
Ningde City, Fujian Province, People s Republic
of
China, 352100 (CN)**
• **JIANG, Nan
Ningde City, Fujian Province, People s Republic
of
China, 352100 (CN)**

(74) Representative: **Icosa
83 avenue Denfert-Rochereau
75014 Paris (FR)**

(54) # NEGATIVE ELECTRODE PLATE, SECONDARY BATTERY, AND ELECTRONIC APPARATUS

(57)    A negative electrode plate, a secondary battery, and an electronic apparatus are provided. The negative electrode plate includes a metal foil, a first conductive coating, and a first active material layer. The metal foil includes a first surface. The first conductive coating is applied on the first surface. The first active material layer is disposed on a surface of the first conductive coating facing away from the first surface. A thickness of the first conductive coating is h, and ten-point average roughness of the first surface is $R_{z1}$, satisfying $0.5 \leq R_{z1}/h \leq 0.8$.

**EP 4 521 486 A1**

## Description

### TECHNICAL FIELD

This application relates to the field of energy storage apparatus, and in particular to, a negative electrode plate, a secondary battery including such negative electrode plate, and an electronic apparatus including such secondary battery.

### BACKGROUND

Secondary batteries are widely used in electric vehicles and consumer electronics due to their advantages such as high volumetric energy density, high output power, and long cycle life. During cycling, the positive and negative electrodes of the secondary battery repeatedly undergo intercalation and deintercalation of metal ions (such as lithium ions or sodium ions), and the volumes of active materials correspondingly expand and contract along with the intercalation and deintercalation of metal ions. The volume of a negative electrode active material (for example, graphite or silicon-based material) expands and contracts significantly. Currently, the negative electrode active material is usually directly applied to a surface of a current collector and dried to form a negative electrode plate. The adhesion force between the negative electrode active material and the current collector is relatively low, easily causing the problem of electrode plate delamination.

### SUMMARY

An objective of this application is to provide a negative electrode plate with a high adhesion force.

According to a first aspect, this application provides a negative electrode plate including a metal foil, a first conductive coating, and a first active material layer. The metal foil includes a first surface. The first conductive coating is applied on the first surface. The first active material layer is disposed on a surface of the first conductive coating facing away from the first surface. A thickness of the first conductive coating is h, $0.3\ \mu m \leq h \leq 4.5\ \mu m$, and ten-point average roughness of the first surface is $R_{z1}$, satisfying $0.4 \leq R_{z1}/h \leq 0.8$.

In the negative electrode plate of this application, the first conductive coating is sandwiched between the first active material layer and the first surface of the metal foil, with the thickness h of the first conductive coating satisfying $0.3\ \mu m \leq h \leq 4.5\ \mu m$, and the ten-point average roughness $R_{z1}$ of the first surface and the thickness h of the first conductive coating satisfying $0.4 \leq R_{z1}/h \leq 0.8$, allowing for a certain adhesion force of the first conductive coating. Thus one part of the first conductive coating is embedded in a concave portion of the first surface, and another part of the first conductive coating adheres to the first active material layer, thereby increasing the adhesion force and reducing the risk of the first active material layer falling off. According to some embodiments of this application, $0.5 \leq R_{z1}/h \leq 0.7$. When $R_{z1}/h$ is within the above range, the thickness of a first part of the first conductive coating embedded in the concave portion of the first surface is equal to or slightly greater than the thickness of a second part, the second part located outside the concave portion and adhered to the first active material layer, so as to balance the stress on the first conductive coating.

According to some embodiments of this application, $1\ \mu m \leq h \leq 3\ \mu m$. When the thickness of the first conductive coating is within the above range, the adhesion force and volumetric energy density can be both considered.

According to some embodiments of this application, $0.3\ \mu m \leq R_{z1} \leq 2.5\ \mu m$.

According to some embodiments of this application, $0.6\ \mu m \leq R_{z1} \leq 1.7\ \mu m$.

According to some embodiments of this application, arithmetic average roughness Ra of the first surface is less than or equal to $0.3\ \mu m$.

According to some embodiments of this application, the metal foil further includes a second surface opposite the first surface, the negative electrode plate further includes a second conductive coating applied on the second surface and a second active material layer disposed on the surface of the second conductive coating, the surface of the second conductive coating facing away from the second surface, and ten-point average roughness of the second surface is $R_{z2}$, with a difference between $R_{z1}$ and $R_{z2}$ being less than $1\ \mu m$.

According to some embodiments of this application, the difference between $R_{z1}$ and $R_{z2}$ is less than $0.5\ \mu m$.

According to some embodiments of this application, $0.3\ \mu m \leq R_{z1} \leq 2.5\ \mu m$. According to some embodiments of this application, a thickness of the metal foil ranges from $4\ \mu m$ to $8\ \mu m$.

According to a second aspect, this application further provides a secondary battery including the negative electrode plate according to any one of the foregoing embodiments.

According to a third aspect, this application further provides an electronic apparatus including the above secondary battery.

## DETAILED DESCRIPTION

The following clearly and detailly describes the technical solutions in some embodiments of this application. Apparently, the described embodiments are some rather than all of the embodiments of this application. Unless otherwise defined, all technical and scientific terms used herein shall have the same meanings as commonly understood by persons skilled in the art to which this application belongs. The terms used in the specification of this application are merely intended to describe specific embodiments rather than to limit this application.

Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" for describing embodiments of this application relates to "one or more embodiments of this application."

The technical terms used herein are merely intended to describe specific embodiments rather than to limit this application. As used herein, the singular forms are intended to include the plural forms as well, unless otherwise clearly indicated in the context. It should be further understood that the term "include" used in this specification indicates the presence of stated features, numerical values, steps, operations, elements, and/or components but do not preclude the presence or addition of one or more other features, numerical values, steps, operations, elements, components, and/or combinations thereof.

It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

An embodiment of this application provides a secondary battery, including a housing and an electrode assembly and electrolyte accommodated in the housing. The electrode assembly includes a positive electrode plate, a negative electrode plate, and a separator disposed between the positive electrode plate and the negative electrode plate.

The negative electrode plate includes a metal foil, a first conductive coating, a first active material layer, a second conductive coating, and a second active material layer. The metal foil includes a first surface and a second surface opposite each other. The first conductive coating is applied on the first surface. The first active material layer is disposed on a surface of the first conductive coating facing away from the first surface. The second conductive coating is applied on the second surface. The second active material layer is disposed on a surface of the second conductive coating facing away from the second surface.

The first conductive coating and the second conductive coating both include a conductive agent and a binder. The conductive agent includes an inorganic conductive agent and/or a conductive polymer. The inorganic conductive agent may include carbon-based conductive powder (for example, carbon nanotubes, super conductive carbon black, carbon fibers, or graphene) and/or metal powder (for example, copper powder, silver powder, or nickel powder). The conductive polymer may include one or more of polyaniline, polypyrrole, polythiophene, polyphenylene sulfide, polyacetylene, polyphenylene, polyparaphenylene, or poly(3,4-ethylenedioxythiophene). The binder in the porous layer includes one or more of polyvinylidene fluoride, vinylidene fluoride-hexafluoropropylene copolymer, polyamide, polyacrylonitrile, polyacrylic ester, polyacrylic acid, polyacrylate, carboxymethyl cellulose sodium, polyvinylpyrrolidone, polyethylene ether, polymethylmethacrylate, polytetrafluoroethylene, polyhexafluoropropylene, styrene-butadiene rubber, acrylate, or epoxy resin.

The metal foil has good impact resistance, which helps to improve the impact pass rate of the secondary battery and enhance safety performance. The metal foil may be a copper foil or a copper alloy foil, with a thickness ranges from 4 $\mu$m to 8 $\mu$m, such as 4 $\mu$m, 5 $\mu$m, 6 $\mu$m, 7 $\mu$m, or 8 $\mu$m. The first surface and the second surface are each a rough surface provided with a structure including a concave portion and a convex portion. The first conductive coating/second conductive coating is partially embedded in the concave portion of the rough surface to increase the adhesion force between the conductive coating and the metal foil.

The ten-point average roughness of the first surface is $R_{z1}$, the ten-point average roughness of the second surface is $R_{z2}$, the thickness of the first conductive coating is h, and the thickness of the second conductive coating is H, satisfying: 0.3 $\mu$m$\leq$h$\leq$4.5 $\mu$m, 0.3 $\mu$m$\leq$H$\leq$4.5 $\mu$m, 0.4$\leq R_{z1}$/h$\leq$0.8, and 0.4$\leq R_{z2}$/H$\leq$0.8. When the thickness of the conductive coating is within the above range, a certain adhesion force can be maintained. In addition, the ten-point average roughness of the surface of the metal foil and the thickness of the conductive coating satisfy the above range, allowing one part of the conductive coating to be embedded in the concave portion of the rough surface and connected with the metal foil, and another part of the conductive coating located outside the concave portion to be connected with the active material layer, thereby improving the adhesion force and reducing the risk of the active material layer falling off.

Preferably, $0.5 \leq R_{z1}/h \leq 0.7$, and $0.5 \leq R_{z2}/H \leq 0.7$. If the thickness difference between the first part of the conductive coating embedded in the concave portion of the surface of the metal foil and the second part located outside the concave portion and adhered to the active material layer is too large and unevenly distributed, the stress received by the conductive coating may be affected. When $R_{z1}/h$ and $R_{z2}/H$ are within the above range, the thickness of a first part of the first conductive coating/second conductive coating embedded in the concave portion of the first surface/second surface and the thickness of a second part located outside the concave portion and adhered to the first active material layer/second active material layer are approximately the same, ensuring the configuration uniformity of the first part and the second part. Because the conductive coating is easier to adhere to the active material layer than the metal foil, the thickness of the first part is configured to be slightly greater than that of the second part, which is more conducive to balancing the stress of the conductive coating.

The thickness of the first conductive coating and the thickness of the second conductive coating satisfying $1 \mu m \leq h \leq 3 \mu m$ and $1 \mu m \leq H \leq 3 \mu m$. The conductive coating is a non-active material layer and does not contribute to the capacity of the secondary battery. When the conductive coating is too thick, the volumetric energy density of the secondary battery decreases; and when the conductive coating is too thin, the adhesion force is insufficient. When the thickness of the conductive coating is within the above range, sufficient adhesion force can be maintained without affecting the volumetric energy density.

The ten-point average roughness $R_{z1}$ of the first surface and the ten-point average roughness $R_{z2}$ of the second surface satisfying $0.3 \mu m \leq R_{z1} \leq 2.5 \mu m$ and $0.3 \mu m \leq R_{z2} \leq 2.5 \mu m$. Preferably, $0.6 \mu m \leq R_{z1} \leq 1.7 \mu m$ and $0.6 \mu m \leq R_{z2} \leq 1.7 \mu m$.

A difference between the ten-point average roughness $R_{z1}$ of the first surface and the ten-point average roughness $R_{z2}$ of the second surface is less than $1 \mu m$. When the difference in the ten-point average roughness between the first surface and the second surface is too large, a difference in the current density distribution between the first surface and the second surface is large, more active materials adhere to a side on which a surface with larger ten-point average roughness is located, a current density is larger, and more lithium ions are intercalated. Long-term charge-discharge cycles cause greater volume expansion of the active material layer on that side, increasing the risk of the metal foil tearing and causing the active material layer to be more likely to fall off, thereby reducing the discharge capacity. When the difference in the ten-point average roughness between the two surfaces of the metal foil is within the above range, the risk of the metal foil being torn and the risk of the active material layer falling off can be reduced. Preferably, a difference between the ten-point average roughness $R_{z1}$ of the first surface and the ten-point average roughness $R_{z2}$ of the second surface is less than $0.5 \mu m$.

Arithmetic average roughness Ra of the first surface and arithmetic average roughness Ra of the second surface are less than or equal to $0.3 \mu m$. The smaller the arithmetic average roughness Ra of the surface, the stronger the tensile strength, making it less likely to the metal foil breaking due to external forces during falling of the secondary battery. When the surface average roughness of the metal foil is within the above range, the risk of the metal foil wrinkling or breaking during falling can be reduced.

The first active material layer and the second active material layer each include a negative electrode active material. The negative electrode active material may include at least one of graphite, hard carbon, soft carbon, silicon, silicon-carbon, or silicon oxide. The active material layer may further include a conductive agent and a binder. The conductive agent may include at least one of conductive carbon black, carbon nanotubes, carbon fibers, or graphene. The binder may include at least one of styrene-butadiene rubber, polyvinyl alcohol, polytetrafluoroethylene, polyvinylidene fluoride, or carboxymethyl cellulose sodium.

The positive electrode plate includes a positive electrode current collector and a positive electrode active material layer disposed on a surface of the positive electrode current collector. The positive electrode current collector may be any known current collector, such as, an aluminum foil, an aluminum alloy foil, or a composite current collector. The positive electrode active material layer includes a positive electrode active material. The positive electrode active material may include at least one of lithium cobalt oxide, lithium nickel oxide, lithium manganese oxide, lithium iron phosphate, or lithium cobalt phosphate. The positive electrode active material layer may further include a conductive agent and a binder. The conductive agent may include at least one of conductive carbon black, carbon nanotubes, carbon fibers, or graphene. The binder may include at least one of styrene-butadiene rubber, polyvinyl alcohol, polytetrafluoroethylene, polyvinylidene fluoride, or carboxymethyl cellulose sodium.

The separator may be any known separator. For example, the separator may be a film selected from one or more materials of polyethylene, polypropylene, non-woven fabric, or polyfiber.

The electrolyte may be any known electrolyte. For example, the electrolyte is selected as a solvent from one or more organic carbonates of ethylene carbonate, propylene carbonate, dimethyl carbonate, diethyl carbonate, or ethyl methyl carbonate, and contains one or more lithium salts of $LiPF_6$, $LiBF_4$, LiBOB, $LiAsF_6$, $Li(CF_3SO_2)_2N$, or $LiCF_3SO_3$ as the solute.

The housing may be any known housing suitable for secondary batteries. For example, the housing may be a pouch obtained by encapsulating with a packaging film, such as aluminum-plastic film or steel-plastic film; or the housing may be a metal housing, such as a steel shell or aluminum shell.

An embodiment of this application provides an electronic apparatus, including the foregoing secondary battery. The electronic apparatus may be any electric device using a secondary battery. For example, the electronic apparatus may be a mobile phone, a portable device, a laptop computer, an electric bicycle, an electric vehicle, a ship, a spacecraft, an electric toy, or an electric tool.

Some specific Examples and Comparative Examples are listed below to better illustrate this application. Lithium-ion batteries are used for illustration.

Example 1

Preparation of positive electrode plate:
Lithium cobalt oxide, conductive carbon black, and polyvinylidene fluoride were mixed at a mass ratio of 95:2:3, added with N-methyl pyrrolidone as a solvent, and stirred to uniformity, to obtain a positive electrode active material slurry. The positive electrode active material slurry was evenly applied to a surface of a 12 $\mu$m aluminum foil, followed by drying, cold pressing, cutting, and welding to a tab, to obtain a positive electrode plate.

Preparation of negative electrode plate:
Carbon nanotubes and polyacrylic acid were mixed at a mass ratio of 90:10, added with deionized water, and stirred to uniformity, to obtain a coating slurry. The coating slurry was applied to a first surface and a second surface of a 5 $\mu$m copper foil and baked at 50°C for 5 min to obtain a first conductive coating and a second conductive coating. A thickness h of the first conductive coating and a thickness H of the second conductive coating were both 1.5 $\mu$m. Ten-point average roughness of the first surface was $R_{z1}$, and ten-point average roughness of the second surface was $R_{z2}$. $R_{z1}$ and $R_{z2}$ were equal (considering the control precision of the actual production process of the copper foil and measurement errors, if a percentage of an absolute value of a difference between $R_{z1}$ and $R_{z2}$ to the larger value of $R_{z1}$ and $R_{z2}$ did not exceed 10%, $R_{z1}$ and $R_{z2}$ were considered equal). Arithmetic average roughness of the first surface was Ra.

Artificial graphite, polyacrylic acid, and carboxymethyl cellulose sodium were mixed at a mass ratio of 97:1.5:1.5, added with deionized water, and stirred to uniformity, to obtain a negative electrode active material slurry.

The negative electrode active slurry was applied to surfaces of the first conductive coating and the second conductive coating, to obtain a negative electrode active material layer, followed by drying, cold pressing, cutting, and welding to a tab, to obtain a negative electrode plate.

Preparation of separator: A polyethylene film with a thickness of 7 $\mu$m was selected as a separator.

Preparation of electrolyte: In a dry argon atmosphere glove box, ethylene carbonate (EC), propylene carbonate (PC), and diethyl carbonate (DEC) were mixed at a mass ratio of EC:PC:DEC=1:1:1, dissolved, fully stirred, added with lithium salt $LiPF_6$, and mixed to uniformity, to obtain an electrolyte, where a concentration of lithium salt $LiPF_6$ was 1 mol/L.

Preparation of lithium-ion battery: The positive electrode plate, polyethylene separator, and negative electrode plate were stacked in sequence, with the separator positioned between the positive electrode plate and the negative electrode plate, and then wound to obtain an electrode assembly. The electrode assembly was placed in an aluminum-plastic film, filled with electrolyte, and formed to obtain a lithium-ion battery.

Examples 2-18 and Comparative examples 2-4

These examples differed from Example 1 in that at least two of the ten-point average roughness $R_{z1}$ of the first surface, the thickness h of the first conductive coating, and the ratio Rz1/h were different.

Comparative example 1

This example differed from Example 1 in that the first surface and the second surface of the copper foil were not coated with the coating slurry, but directly coated with the negative electrode active material slurry to form a negative electrode active material layer.

The lithium-ion batteries in Examples 1-18 and Comparative examples 1-4 were subjected to adhesion force test and volumetric energy density test. The parameters and test results of Examples 1-18 and Comparative examples 1-4 are shown in Table 1.

Surface roughness test:
Surface roughness of the copper foil was measured using a shape measurement device (MarSurf, model: M 300C portable roughness measurement device) according to the industrial standard IPC-TM-650 2.2.17. Specifically, pressure was set to 0.75 mN, and a diamond stylus with a tip radius of about 2 $\mu$m was used to slowly slide along the surface of the copper foil under test. Due to the uneven surface of the copper foil under test, the diamond stylus made vertical movement in a direction perpendicular to the surface of the copper foil. A vertical displacement was converted into an electrical signal by a sensor, amplified, processed, and displayed on a display instrument as a ten-point average roughness value Rz. On a surface profile curve of the copper foil, a length L was taken, and with the center line thereof as an X-axis, the sum of areas of all oblique lines within the length was divided by the measured length L, to obtain the arithmetic average roughness Ra.

Peeling force test of the negative electrode plate:

A double-sided tape was used to attach the negative electrode plate to a steel plate. The negative electrode plate was cut into strips of 20 cm in length and 20 mm in width, and the strips were attached to the double-sided tape. A roller was used to roll back and forth on the strips 4 times. One end of the strip was clamped by a gripper of a tensile testing machine, and the tensile testing machine was turned on to test the peeling force of the negative electrode active material layer from the conductive coating, thus testing the adhesion force of the negative electrode plate.

Volumetric energy density test:

The lithium-ion battery was charged at a constant current of 0.2C to 4.45 V, and charged at a constant voltage to 0.02C to achieve full charge; and then discharged at a constant current of 0.2C until the voltage dropped to 3.0 V. The total capacity C and voltage plateau U during discharge were recorded, and the actual thickness, length, and width of the lithium-ion battery were measured to calculate the actual volume V of the lithium-ion battery, where the volumetric energy density=C*U/V.

**Table 1**

| | $R_{z1}$ (μm) | h (μm) | $R_{z1}$/h | Adhesion force (N/m) | Volumetric energy density (Wh/L) |
|---|---|---|---|---|---|
| Example 1 | 0.3 | 0.38 | 0.8 | 9.1 | 758 |
| Example 2 | 0.6 | 1.00 | 0.6 | 10 | 753 |
| Example 3 | 0.8 | 1.60 | 0.5 | 10.8 | 748 |
| Example 4 | 1 | 2.00 | 0.5 | 11.3 | 745 |
| Example 5 | 1 | 1.25 | 0.8 | 11 | 750 |
| Example 6 | 1.2 | 3.00 | 0.4 | 12 | 740 |
| Example 7 | 1.2 | 2.40 | 0.5 | 13 | 744 |
| Example 8 | 1.2 | 2.00 | 0.6 | 12.8 | 745 |
| Example 9 | 1.2 | 1.71 | 0.7 | 12.5 | 747 |
| Example 10 | 1.2 | 1.50 | 0.8 | 11.2 | 748 |
| Example 11 | 1.7 | 2.83 | 0.6 | 13.8 | 742 |
| Example 12 | 1.7 | 2.43 | 0.7 | 13.6 | 744 |
| Example 13 | 1.7 | 2.13 | 0.8 | 12.2 | 745 |
| Example 14 | 2.2 | 4.40 | 0.5 | 14 | 730 |
| Example 15 | 2.2 | 3.67 | 0.6 | 13.9 | 738 |
| Example 16 | 2.2 | 3.14 | 0.7 | 13.8 | 740 |
| Example 17 | 2.2 | 2.75 | 0.8 | 12.9 | 743 |
| Example 18 | 2.4 | 3.43 | 0.7 | 13.9 | 739 |
| Comparative example 1 | 2.4 | 0.00 | / | 6 | 760 |
| Comparative example 2 | 1.2 | 4.00 | 0.3 | 7.5 | 740 |
| Comparative example 3 | 2.2 | 2.44 | 0.9 | 8 | 744 |
| Comparative example 4 | 2.4 | 4.80 | 0.5 | 8.4 | 725 |

From Examples 1-18 and Comparative Examples 1-4, it can be known that configuring a conductive coating sandwiched between the metal foil and the active material layer can enhance the adhesion force of the negative electrode plate, reduce the risk of the active material layer falling off, and have a minimal impact on the volumetric energy density. In a case of 0.3 μm≤h≤4.5 μm and 0.4≤$R_{z1}$/h≤0.8, the adhesion force is large. From Examples 6-17, it can be known that when $R_{z1}$ is fixed and $R_{z1}$/h is 0.5-0.7, the adhesion force is larger. When h is 1-3 μm, the adhesion force and volumetric energy density are high.

Examples 19-21

These examples differed from Example 8 in the arithmetic average roughness Ra.

The lithium-ion batteries of Examples 8 and 19-21 were subjected to adhesion force test and drop test. For parameters and test results of the examples, refer to Table 2.

Drop test:

The lithium-ion batteries were freely dropped from a height of 1.8 meters onto a smooth marble surface. Each lithium-ion battery was repeatedly subjected to the above operation until the lithium-ion battery caught fire, exploded, or had electrolyte leakage, and the number of drops without fire/explosion/ electrolyte leakage was recorded.

**Table 2**

|  | $R_{z1}$ (μm) | h (μm) | $R_{z1}$/h | Ra (μm) | Number of drops | Adhesion force (N/m) |
|---|---|---|---|---|---|---|
| Example 8 | 1.2 | 2 | 0.6 | 0.2 | 38 | 12.8 |
| Example 19 | 1.2 | 2 | 0.6 | 0.1 | 43 | 12.7 |
| Example 20 | 1.2 | 2 | 0.6 | 0.3 | 34 | 13.1 |
| Example 21 | 1.2 | 2 | 0.6 | 0.4 | 29 | 13.3 |

From Examples 8 and 19-21, it can be known that as Ra decreases, the number of drops increases; a larger number of drops indicates better drop resistance. This may be because when Ra is small, the tensile strength of the copper foil is good, and the adhesion force is intended to increase. When dropped, the metal foil is stretched to varying degrees. If the tensile strength is poor, the metal foil easily breaks, leading to fire or explosion. When Ra is less than or equal to 0.3 μm, the number of drops and adhesion force can be balanced, reducing the risk of metal foil breaking during falling, and the risk of the active material layer falling off.

Examples 22-25

These examples differed from Example 8 in ten-point average roughness $R_{z2}$ of the second surface.

The lithium-ion batteries of Examples 8 and 22-25 were subjected to cycling capacity retention rate test. For parameters and test results of the examples, refer to Table 3.

Cycling capacity retention rate test:

The lithium-ion batteries under test were left standing at 25±3°C for 5 min, charged at a constant current of 0.25C to a voltage of 4.50 V, and charged at constant voltage of 4.50 V to 0.025C; and then left standing for 5 min, discharged at a constant current of 0.5C to 3.0 V, and left standing for 5 min. The capacity at this time was recorded as D0; the above charge-discharge process was repeated 1000 times, and the discharge capacity of the last cycle was recorded as D1. After 1000 cycles, the capacity retention rate was calculated as D1/D0 in units of %.

**Table 3**

|  | $R_{z1}$ (μm) | h (μm) | $R_{z2}$ (μm) | H (μm) | $R_{z1}$-$R_{z2}$ (μm) | Capacity retention rate |
|---|---|---|---|---|---|---|
| Example 22 | 1.2 | 2 | 0.9 | 2 | 0.3 | 88% |
| Example 23 | 1.2 | 2 | 1 | 2 | 0.2 | 90% |
| Example 24 | 1.2 | 2 | 1.5 | 2 | -0.3 | 88% |
| Example 25 | 1.2 | 2 | 1.7 | 2 | -0.5 | 86% |
| Example 8 | 1.2 | 2 | 1.2 | 2 | 0 | 92% |

From Examples 8 and 22-25, it can be known that as the difference in surface roughness between $R_{z1}$ and $R_{z2}$ of the two surfaces of the metal foil decreases, the capacity retention rate is intended to increase. When the difference between $R_{z1}$ and $R_{z2}$ is less than 1 μm, the capacity retention rate reaches 82%.

The descriptions disclosed above are merely preferred embodiments of this application, and certainly cannot constitute any limitation on this application. Accordingly, equivalent changes made in accordance with this application still fall within the scope of this application.

**Claims**

1. A negative electrode plate, **characterized in that** the negative electrode plate comprising:

   a metal foil comprising a first surface;
   a first conductive coating applied on the first surface; and
   a first active material layer disposed on a surface of the first conductive coating facing away from the first surface;
   a thickness of the first conductive coating is h, $0.3\ \mu m \le h \le 4.5\ \mu m$, a ten-point average roughness of the first surface is $R_{z1}$, and $0.4 \le R_{z1}/h \le 0.8$.

2. The negative electrode plate according to claim 1, **characterized in that**

$$0.5 \le R_{z1}/h \le 0.7.$$

3. The negative electrode plate according to claim 1, **characterized in that**

$$1.0\ \mu m \le h \le 3\ \mu m.$$

4. The negative electrode plate according to claim 1, **characterized in that**

$$0.3\ \mu m \le R_{z1} \le 2.5\ \mu m.$$

5. The negative electrode plate according to claim 4, **characterized in that**

$$0.6\ \mu m \le R_{z1} \le 1.7\ \mu m.$$

6. The negative electrode plate according to claim 1, **characterized in that** an arithmetic average roughness Ra of the first surface is less than or equal to $0.3\ \mu m$.

7. The negative electrode plate according to claim 1, **characterized in that**
   the metal foil further comprises a second surface opposite to the first surface, the negative electrode plate further comprises a second conductive coating applied on the second surface and a second active material layer disposed on a surface of the second conductive coating, the surface of the second conductive coating facing away from the second surface, a ten-point average roughness of the second surface is $R_{z2}$, a difference between $R_{z1}$ and $R_{z2}$ being less than $1\ \mu m$.

8. The negative electrode plate according to claim 7, **characterized in that** the difference between $R_{z1}$ and $R_{z2}$ is less than $0.5\ \mu m$.

9. The negative electrode plate according to claim 7, **characterized in that**

$$0.3\ \mu m \le R_{z1} \le 2.5\ \mu m.$$

10. The negative electrode plate according to claim 1, **characterized in that** a thickness of the metal foil ranges from $4\ \mu m$ to $8\ \mu m$.

11. A secondary battery, comprising the negative electrode plate according to any one of claims 1 to 10.

**12.** An electronic apparatus, comprising the secondary battery according to claim 11.

Europäisches
Patentamt

European
Patent Office

Office européen
des brevets

# EUROPEAN SEARCH REPORT

**Application Number**

EP 24 19 8480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/144729 A1 (SES HOLDINGS PTE LTD [SG]) 3 August 2023 (2023-08-03) * paragraphs [0009], [0017], [0023], [0070] * * figures 3a-b * | 1-12 | INV. H01M4/133 H01M4/66 H01M10/052 H01M4/02 |
| X | US 10 333 134 B2 (SION POWER CORP [US]) 25 June 2019 (2019-06-25) * claim 1 * * column 20 * | 1-12 | |
| X | WO 2021/253129 A1 (SALIENT ENERGY INC [CA]) 23 December 2021 (2021-12-23) * claims 1,21,26 * | 1-6, 10-12 | |
| T | Metallic Foils Task Group: "IPC-TM-650-2.2.17A", , 1 February 2001 (2001-02-01), XP093232827, Retrieved from the Internet: URL:https://www.ipc.org/sites/default/files/test_methods_docs/2-2_2-2-17a.pdf [retrieved on 2024-12-10] * the whole document * | 1-9 | |

**TECHNICAL FIELDS SEARCHED (IPC)**

H01M

The present search report has been drawn up for all claims

| Place of search | Date of completion of the search | Examiner |
|---|---|---|
| Munich | 10 December 2024 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8480

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | Publication date |
|---|---|---|---|
| WO 2023144729 A1 | 03-08-2023 | CN 118541818 A | 23-08-2024 |
| | | EP 4470047 A1 | 04-12-2024 |
| | | KR 20240139052 A | 20-09-2024 |
| | | WO 2023144729 A1 | 03-08-2023 |
| US 10333134 B2 | 25-06-2019 | CN 105051944 A | 11-11-2015 |
| | | EP 2973789 A1 | 20-01-2016 |
| | | JP 2016511527 A | 14-04-2016 |
| | | KR 20150132319 A | 25-11-2015 |
| | | US 2014272597 A1 | 18-09-2014 |
| | | US 2017352863 A1 | 07-12-2017 |
| | | US 2019229323 A1 | 25-07-2019 |
| | | WO 2014151385 A1 | 25-09-2014 |
| WO 2021253129 A1 | 23-12-2021 | BR 112022025762 A2 | 11-04-2023 |
| | | EP 4169096 A1 | 26-04-2023 |
| | | KR 20230051483 A | 18-04-2023 |
| | | US 2023307617 A1 | 28-09-2023 |
| | | WO 2021253129 A1 | 23-12-2021 |

EPO FORM P0459

For more details about this annex : see Official Journal of the European Patent Office, No. 12/82